Europäisches Patentamt

European Patent Office

Office européen des brevets

(11) Veröffentlichungsnummer: **0 201 803**
**A2**

(12) # EUROPÄISCHE PATENTANMELDUNG

(21) Anmeldenummer: **86105911.1**

(51) Int. Cl.⁴: **B 60 P 3/36**

(22) Anmeldetag: **29.04.86**

(30) Priorität: **11.05.85 DE 3517053**

(43) Veröffentlichungstag der Anmeldung:
**20.11.86 Patentblatt 86/47**

(84) Benannte Vertragsstaaten:
**AT BE CH DE FR GB IT LI LU NL SE**

(71) Anmelder: **Ulschmid, Hanns**
**Hopfenstrasse 21**
**D-8411 Schönhofen(DE)**

(72) Erfinder: **Ulschmid, Hanns**
**Hopfenstrasse 21**
**D-8411 Schönhofen(DE)**

(74) Vertreter: **Graf, Helmut, Dipl.-Ing. et al,**
**Patentanwälte Dipl.-Ing. A. Wasmeier Dipl.-Ing. H. Graf**
**Greflinger Strasse 7 Postfach 382**
**D-8400 Regensburg(DE)**

(54) **Campingfahrzeug.**

(57) Die Erfindung bezieht sich auf ein Campingfahrzeug mit einer im Innenraum des Fahrzeugs verankerten Camping- bzw. Wohnausstattung.

Sie ist dadurch gekennzeichnet, daß auf dem Boden des Innenraumes ein Zwischenboden vorgesehen ist, welcher lösbar mit dem Fahrzeugboden verbunden ist und an welchem die Wohnausstattung verankert ist.

Fig.1

EP 0 201 803 A2

Croydon Printing Company Ltd.

## Campingfahrzeug

Die Erfindung bezieht sich auf ein Campingfahrzeug mit einer im Innenraum des Fahrzeugs verankerten Wohnausstattung.

Unter "Wohnausstattung" im Sinne der vorliegenden Erfindung sind ganz allgemein solche Einrichtungselemente bzw. Möbel zu verstehen, die für das Wohnen, Schlafen, Kochen usw. in einem Campingfahrzeug erforderlich sind. Hierunter sind demnach insbesondere Sitz- und Schlafmöbel, Tische, Schrankmöbel sowie Koch- und Spülgelegenheiten für Geschirr zu verstehen.

Bei Campingfahrzeugen besteht schon aus Sicherheitsgründen die Vorschrift, daß die gesamte Wohnausstattung im Innenraum des Fahrzeugs so sicher verankert ist, daß sich selbst bei extremen Beschleunigungen Teile der Wohnausstattung nicht aus der Verankerung lösen. Weiterhin besteht vielfach der Wunsch, Campingfahrzeuge bzw. Campingbusse auch andersweitig, beispielsweise als Transportfahrzeug oder als Kleinbus nutzen zu können, wofür dann die für den reinen Camping-Zweck vorgesehene Wohnausstattung ausgebaut werden muß. Das Aus-und Einbauen dieser Wohnausstattung ist zwar auch bei vielen derzeit auf dem Markt befindlichen Campingfahrzeugen grundsätzlich möglich, bereitet jedoch erhebliche Schwierigkeiten und ist vor allem mit einem großen zeitlichen Aufwand verbunden.

Der Erfindung liegt die Aufgabe zugrunde, ein Campingfahrzeug aufzuzeigen, welches so ausgebildet ist, daß ein bequemes Ein- und Ausbauen der Wohnausstattung ohne großen zeitlichen Aufwand möglich ist.

Zur Lösung dieser Aufgabe ist ein Campingfahrzeug erfindungsgemäß so ausgebildet, daß auf dem Boden des Fahrzeuginnenraumes ein Zwischenboden vorgesehen ist, welcher lösbar mit dem Boden des Fahrzeuginnenraumes verbunden ist und an welchem die Wohnausstattung verankert ist.

Der Zwischenboden ist dabei einteilig, vorzugsweise jedoch mehrteilig ausgebildet, wobei im letzteren Fall jedes Element der Wohnausstattung nur an einem einzigen Teil des Zwischenbodens verankert ist. Zusammen mit dem Zwischenboden bzw. zusammen mit dessen Teilen kann somit die gesamte Wohnausstattung in einem Block oder in mehreren Blöcken aus dem Fahrzeug ausgebaut bzw. in dieses wieder eingebaut werden, so daß ein sehr schnelles und bequemes Umrüsten eines vorhandenen Fahrzeugs in ein Campingfahrzeug bzw. in ein Transportfahrzeug oder in einen Kleinbus ermöglicht wird. Zur Befestigung des Zwischenbodens können die am Fahrzeugboden bereits vorhandenen bzw. vom Fahrzeughersteller vorgesehenen Verankerungselemente verwendet werden.

Bei einer bevorzugten Ausführungsform der Erfindung ist der Zwischenboden ein Rahmen aus Eisenprofilen, der dann vorzugsweise von zwei Rahmenteilen gebildet ist. An diesem Rahmen bzw. an diesen Rahmenteilen ist dann die Wohn- oder Campingausstattung befestigt.

Weiterbildungen der Erfindung sind Gegenstand der Unteransprüche.

Die Erfindung wird im folgenden anhand der Figuren an Ausführungsbeispielen näher erläutert. Es zeigen:

Fig. 1 in schematischer Darstellung einen Querschnitt durch ein Campingfahrzeug gemäß der Erfindung in Form eines Campingbusses;

Fig. 2 eine Draufsicht auf den von zwei Rahmenteilen gebildeten Zwischenboden des Campingfahrzeugs gemäß Fig. 1;

Fig. 3 in vergrößerter Darstellung und im Schnitt entsprechend der Linie I-I der Fig. 2 eine der lösbaren Befestigungen für den von den beiden Rahmenteilen gebildeten Zwischenboden;

Fig. 4 eine Draufsicht auf eine der an der Innenseite des Fahrzeugbodens vorgesehenen Verankerungen für die Befestigung gemäß Fig. 3;

Fig. 5 eine ähnliche Darstellung wie Fig. 3, jedoch bei einer anderen Ausbildung der am Fahrzeugboden vorgesehenen Verankerung.

In den Figuren ist 1 ein Kleintransporter, dessen hinter dem Fahrer- und Beifahrersitz liegender Teil des Innenraumes 2 in der für Kleinbusse bzw. Campingbusse üblicher Weise ausgebildet ist, d.h. insbesondere mit Fenstern an den Seitenwänden der Karosserie sowie mit wenigstens einer Heck-Tür versehen ist. Der Innenraum 2 ist unten durch den horizontalen Fahrzeugboden 3 abgeschlossen. Auf diesem Fahrzeugboden liegen bei der dargestellten Ausführungsform zwei Rahmenteile 4 und 5 auf, die den gesamten, hinter dem Fahrer- bzw. Beifahrersitz befindlichen Fahrzeugboden 3 ausfüllen und in Fahrzeuglängsrichtung hintereinander und unmittelbar aneinander anschließend angeordnet sind. Die beiden Rahmenteile 4 und 5 bilden den Zwischenboden im Sinne der Erfindung. Jeder der beiden Rahmenteile 4 bzw. 5 ist aus Längen- bzw. Zuschnitten eines Rechteck-Hohlprofils aus Stahl hergestellt, die (Längen oder Zuschnitte) an ihren Enden zu dem rechteckigen oder quadratischen Rahmenteil 4 bzw. 5 miteinander verschweißt sind. Die beiden Rahmenteile 4 und 5 besitzen in Fahrzeugquerrichtung eine Breite, die in etwa gleich der Breite des Innenraumes 2 ist. Die Längen der Rahmenteile 4 und 5 in Fahrzeuglängsrichtung sind so gewählt, daß die beiden Rahmenteile 4 und 5 in ihrer Gesamtheit in etwa von der Rückseite des Fahrer- bzw. Beifahrersitzes bis an das Heck bzw. an die Rückseite des Innenraumes 2 reichen. Bei der dargestellten Ausführungsform ist davon ausgegangen, daß die beiden Rahmenteile 4 und 5 gleichartig, insbesondere auch gleich groß ausgeführt sind. Selbstverständlich sind auch Ausführungen denkbar, in denen die Rahmenteile 4 und 5 unterschiedliche Größe aufweisen oder aber bei denen mehr als zwei Rahmenteile oder aber nur ein einziger, den Zwischenboden bildender Rahmenteil verwendet ist.

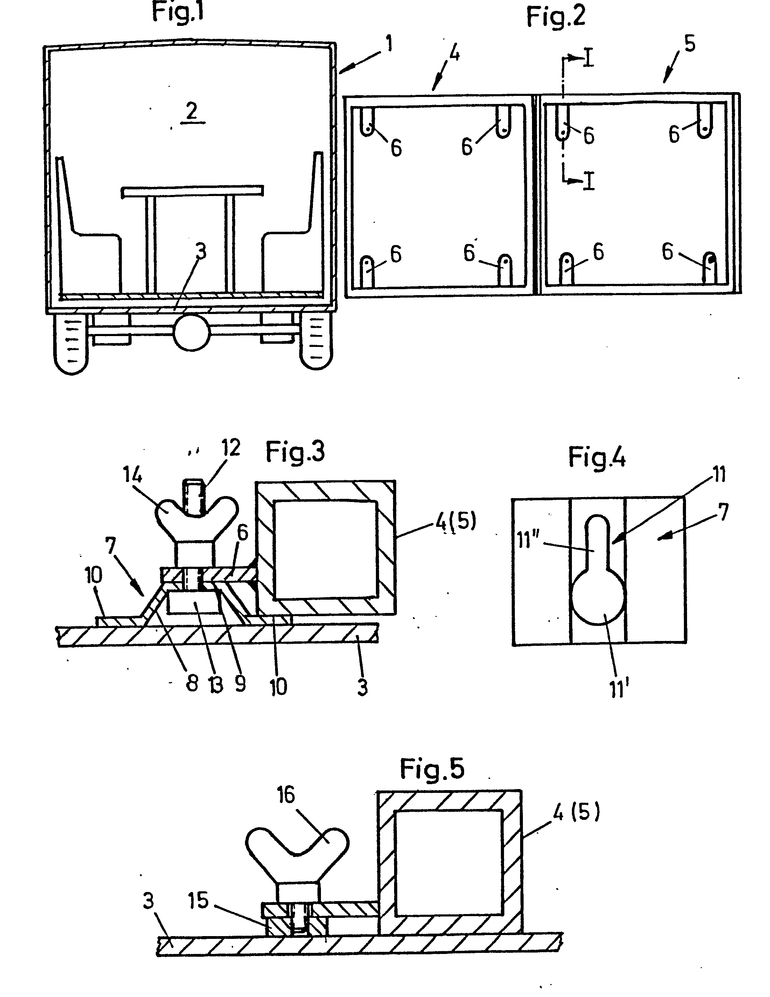

Die Rahmenteile 4 und 5 sind lösbar am Fahrzeugboden 3 verankert. Hierfür sind an jedem Rahmenteil 4 bzw. 5, d.h. an den in Fahrzeuglängsrichtung liegenden Seiten dieser Rahmenteile mehrere nach innen reichende, d.h. in den von dem betreffenden Rahmenteil umschlossenen Raum reichende Laschen 6 aus Flacheisen mit einem Ende angeschweißt, die an ihrem anderen, freien Ende eine Bohrung aufweisen. An der Innenfläche des Fahrzeugbodens 3 sind mehrere Verankerungselemente 7 vorgesehen, wobei bei im Innenraum 2 befestigten Rahmenteilen 4 und 5 wenigstens unter jeder Lasche 6 ein Verankerungselement 7 angeordnet ist. Die Verankerungselemente 7 bestehen jeweils aus einem Blechprofil mit U- oder trapezartigem Querschnitt, welches zwei Schenkel 8 sowie einen diese Schenkel miteinander verbindenden Jochabschnitt 9 aufweisen. Jeder Schenkel 8 geht an seiner dem Jochabschnitt 9 entfernt liegenden Kante in eine Abwinklung 10 über. An den beiden Abwinklungen ist jedes Verankerungselement 7 an der Innenfläche des Fahrzeugbodens 3 durch Schrauben, Nieten oder Schweißen derart befestigt, daß der Jochabschnitt 9 parallel zum und im Abstand vom Fahrzeugboden 3 liegt. In dem Jochabschnitt 9 jedes Verankerungselementes 7 ist eine Öffnung 11 vorgesehen, die schlüssellochartig mit einem Abschnitt 11´ größeren Durchmessers bzw. größerer Breite und mit einem Abschnitt 1" kleinerer Breite ausgebildet ist. Durch den Abschnitt 11´ ist ein Gewindebolzen 12 mit seinem Kopf 13 einführbar, der bei befestigten Rahmenteilen 4 und 5 den Jochabschnitt 9 im Bereich des Abschnittes 11" hintergreift. Der Gewindebolzen 12 reicht von unten her durch die in der zugehörigen Lasche 6 vorgesehene Bohrung hindurch. Auf das obere Ende des Gewindebolzens 12 ist eine Flügelmutter 14 aufgeschraubt, so daß nach dem Festziehen der Flügelmutter 14 der Gewindebolzen 12 gegen unerwünschtes Verschieben in der Öffnung 11 bzw. an dem Verankerungselement 7 gehalten ist und die betreffende Lasche 6 gegen die Oberseite des Jochabschnittes 9 angepreßt anliegt. Wie die Fig. 3 zeigt, ist jede Lasche 6 derart an dem Rahmenteil 4 bzw. 5 befestigt, daß dieser Rahmenteil auf dem Fahrzeugboden 3 bzw. auf den Abwinklungen 10 der Verankerungselemente 7 aufliegt. Es

0201803

versteht sich, daß anstelle von mehreren, einzelnen Verankerungselementen 7 auch zwei, parallel zueinander und im Abstand voneinander angeordnete Verankerungselemente 7 vorgesehen sein können, die sich in Fahrzeuglängsrichtung jeweils über die gesamte Länge oder den größten Teil der Länge des Fahrzeugbodens 3 erstrecken und in einem der Anordnung der Laschen 6 an den Rahmenteilen 4 und 5 entsprechenden Abstand mit den Öffnungen 11 versehen sind. Um beim Festziehen der Flügelmuttern 14 ein Mitdrehen der Gewindebolzen 12 zu vermeiden, sind die Köpfe 13 als Vierkant- oder Sechskantköpfe derart ausgebildet, daß sie mit einem Teil ihres Umfangs gegen die Innenflächen der Schenkel 8 anliegen und dadurch verdrehungssicher gehalten sind.

Bei der in der Fig. 5 gezeigten Befestigungsart für die Rahmenteile 4 und 5 sind am Fahrzeugboden 3 Muttergewindestücke 15 vorgesehen, in die durch die Bohrungen der Laschen 6 hindurchreichende Flügelschrauben 16 einschraubbar sind. Die Muttergewindestücke 15 sind beispielsweise auf den Fahrzeugboden 3 aufgeschweißte Muttern oder andere, mit einem Gewinde versehene Elemente, wie beispielsweise mit einem Gewinde versehene Platten. Sofern es die Konstruktion des Fahrzeugbodens 3 zuläßt, können in diesen auch direkt Gewindebohrungen zum Einschrauben der Flügelschrauben 16 vorgesehen sein. Auf den den Zwischenboden bildenden Rahmenteilen 4 und 5 ist die gesamte Wohnausstattung des Campingfahrzeugs befestigt, und zwar bei der dargestellten Ausführungsform an dem Rahmenteil 5 zwei ausziehbare und auch als Liegen verwendbare Sitzbänke 17 und 18, die jeweils unmittelbar an einer der beiden, in Fahrzeuglängsrichtung verlaufenden, den Innenraum 2 begrenzenden Außenwandungen des Fahrzeugs angeordnet sind und mit ihrer Längserstreckung in Fahrzeuglängsrichtung verlaufen. Zwischen den beiden Sitzbänken 17 und 18 ist auf dem Rahmenteil 5 eine zusätzliche Bodenplatte 19 befestigt, die die Lauffläche des Campingfahrzeugs im Bereich zwischen den Sitzbänken 17 und 18 bildet und auf der ein Tisch 20 steht. Die Bodenplatte 19 ist dabei vorzugsweise so ausgebildet und an dem Rahmenteil 5 befestigt, daß sie von diesem Rahmenteil abgenommen werden kann.

Am Rahmenteil 4 sind bei der dargestellten Ausführungsform Schrankmöbel befestigt, die beispielsweise auch eine eingebaute Kochmulde sowie ein eingebautes Geschirr-Spülbecken aufweisen. Selbstverständlich kann die Art und Anordnung der Wohnausstattung auch anders als voranstehend beschrieben sein. Allen Ausführungsformen ist jedoch gemeinsam, daß diese Wohnausstattung auf einem Zwischenboden verankert ist, der seinerseits lösbar am Fahrzeugboden 3 befestigt ist. Durch diese Ausführung ist es möglich, das vorhandene Fahrzeug 1 mit geringem zeitlichen Aufwand von einem reinen Transportfahrzeug mit großer Ladefläche oder von einem Kleinbus mit entsprechenden Sitzen in ein Campingfahrzeug umzurüsten. Die zweiteilige Ausbildung des Zwischenbodens hat nicht nur den Vorteil einer leichteren Handhabung beim Umrüsten des Fahrzeugs 1, sondern vor allem auch den Vorteil, daß bei Verwendung des Fahrzeugs als Campingfahrzeug ein Teil der Wohnausstattung, nämlich z.B. der mit dem Sitzbereich (Sitzbänken 17 und 18) versehene Teil des Zwischenbodens (Rahmen 5) am Verweilort bzw. am Campingplatz vorübergehend aus dem Fahrzeug entnommen und neben das Fahrzeug für einen Aufenthalt im Freien aufgestellt werden kann. Die Ausbildung des Zwischenbodens in Form eines oder mehrerer Rahmenteile hat schließlich den Vorteil, daß bei relativ geringem Gewicht eine hohe Stabilität für den Zwischenboden erzielbar ist.

**Patentansprüche:**

1. Campingfahrzeug mit einer im Innenraum des Fahrzeugs verankerten Camping- bzw. Wohnausstattung, dadurch gekennzeichnet, daß auf dem Boden (3) des Innenraumes (2) ein Zwischenboden (4, 5) vorgesehen ist, welcher lösbar mit dem Fahrzeugboden verbunden ist und an welchem die Wohnausstattung (17, 18) verankert ist.

2. Campingfahrzeug nach Anspruch 1, dadurch gekennzeichnet, daß der Zwischenboden (4, 5) mehrteilig ausgebildet ist, und daß jedes Element der Wohnausstattung in seiner Gesamtheit jeweils nur an einem Teil des Zwischenbodens verankert ist.

3. Campingfahrzeug nach Anspruch 2, dadurch gekennzeichnet, daß der Zwischenboden (4, 5) zweiteilig ausgebildet ist.

4. Campingfahrzeug nach einem der Ansprüche 1 bis 3, dadurch gekennzeichnet, daß der Zwischenboden von einem Rahmen (4, 5) aus Eisen- oder Stahlprofil gebildet ist.

5. Campingfahrzeug nach Anspruch 4, dadurch gekennzeichnet, daß der Zwischenboden von wenigstens zwei Rahmenteilen (4, 5) gebildet ist.

6. Campingfahrzeug nach einem der Ansprüche 1 bis 5, dadurch gekennzeichnet, daß der Zwischenboden (4, 5) Laschen (6) aufweist, die mit Hilfe von schraubenartigen Befestigungselementen (12, 14; 16) an am Fahrzeugboden (3) vorgesehenen Verankerungselementen (7, 15) lösbar befestigt sind.

7. Campingfahrzeug nach Anspruch 6, dadurch gekennzeichnet, daß die Verankerungselemente (7) schlüssellochartige Öffnungen (11) zum Einführen von mit einem Kopf (13) versehene Gewindebolzen (12) aufweisen.

8. Campingfahrzeug nach Anspruch 6, dadurch gekennzeichnet, daß die Verankerungselemente von einem Muttergewindestück (15) oder einer Gewindebohrung am Fahrzeugboden (3) gebildet sind.

0201803

Fig.1  Fig.2

Fig.3  Fig.4

Fig.5